# EUROPÄISCHE PATENTSCHRIFT

(11) **EP 0 317 732 B1**
(45) Veröffentlichungstag und Bekanntmachung des Hinweises auf die Patenterteilung: **14.09.1994**
(21) Anmeldenummer: 88115719.2
(22) Anmeldetag: 23.09.1988
(51) Int. Cl.: F16F 1/36

(54) **Federelement**
Spring element
Elément ressort

(30) Priorität: 23.11.1987 DE 3739638
(43) Veröffentlichungstag der Anmeldung: 31.05.1989
(73) Patentinhaber: WOCO Franz-Josef Wolf & Co., D-63628 Bad Soden-Salmünster (DE)
(72) Erfinder: Wolf, Franz Josef, D-6483 Bad Soden-Salmünster (DE); Pletsch, Hubert, D-6483 Bad Soden-Salmünster (DE)
(74) Vertreter: Jaeger, Klaus, Dr.

(56) Entgegenhaltungen:
- EP-A- 0 187 888
- CH-A- 351 167
- DE-U- 1 748 423
- DE-U- 8 535 344
- FR-A- 1 206 593
- GB-A- 2 064 713
- US-A- 2 371 788
- US-A- 3 028 610
- M. Thesenwitz, O. Weber, "Auslegung von Aggregatelagerungen in der Kompaktfahrzeugklasse", Tagung: Einfluss der elastischen Motorlagerung auf den Schwingungskomfort im PKW, Haus der Technik, 30. - 31. Mai 1988, 1. Auflage Mai 1988, Seite 8, WOCO Industrietechnik GmbH Sprudelallee 10, Bad Soden-Salmünster, WOCO-Texte Nr. TH-92022-88-VW

## Beschreibung

Die Erfindung betrifft ein Federelement der im Oberbegriff des Anspruchs 1 genannten Art.

Es ist aus der CH-A-351167 bekannt, einen als Puffer oder Auflager dienenden Elastomerblock mit sich im Raum überkreuzenden, aber nicht schneidenden zylindrischen hohlen Kanälen zu durchsetzen, um einen Verlauf der Federkennlinie eines solchen Federelements einzustellen, der flacher als der Kennlinienverlauf des entsprechenden keine Hohlkanäle aufweisenden Elastomerblocks ist.

Bei Federelementen dieser Art kann eine nur mäßig weichere Kennlinie eingestellt werden, wenn die mechanische Festigkeit des Elastomerblocks nicht gefährdet werden soll. Für zahlreiche technische Anwendungsbereiche, so beispielsweise bei einer Verwendung eines solchen Federelements als Motorlager im Kraftfahrzeugbau, sind außerdem die akustischen Eigenschaften dieses bekannten Federelementes unzureichend. Ein beispielsweise über ein Auflageranschlußstück in das Federelement eingeleiteter Körperschall wird fast ungedämpft auf ein Widerlageranschlußstück übertragen. Bei Verwendung des Federelements als Motorlager würde dies beispielsweise bedeuten, daß im Motorblock oder im Antriebsaggregat erzeugte akustische Störfrequenzen ungedämpft auf die Fahrzeugkarosserie und damit in die Fahrgastzelle gelangen würden.

Eine Verbesserung der akustischen Entkopplung zwischen Auflager und Widerlager wird in einem aus der EP-A-0187888 bekannten Federelement dadurch erzielt, daß die sich im Raum auf verschiedenen Ebenen überkreuzenden, aber nicht schneidenden Hohlkanäle zusätzliche Hohlräume durchsetzen, deren Querschnitt in der Radialebene der Hohlkanäle größer als der Querschnitt der Hohlkanäle in dieser Ebene ist. Diese Hohlräume haben insbesondere Kugelgestalt. Eine besonders effektive akustische Abkopplung zwischen Auflager und Widerlager wird bei dieser Struktur dann und dadurch erzielt, daß bei bestimmungsgemäßer Verwendung des Federelementes der Auflastvektor senkrecht zu den Kanalscharebenen ausgerichtet ist, und daß die kugelförmigen Hohlräume nach Art einer kubisch raumzentrierten Kugelpackung homogen verteilt im Elastomerblock ausgebildet sind. Durch diese Anordnung werden die linear vom Auflager zum Widerlager durch den Elastomerblock durchgehenden Materialbrücken auf einen minimalen Restquerschnitt vermindert, was wesentlich zur guten Körperschallisolation dieses bekannten Federelementes beiträgt.

Dieses gute akustische Verhalten und die senkrecht zu den sich im Raum überkreuzenden Kanalscharen weiche Federkennlinie bei in dieser Richtung mechanisch widerstandsfähigem Elastomerblock wird jedoch mit mechanisch-konstruktiven Nachteilen in Richtung der Kanalscharen, bei bestimmungsgemäßem Einsatz des Federelements also in Richtung senkrecht zum Auflastvektor, erkauft. So ist naturgemäß die Quersteifigkeit dieses bekannten Lagers geringer als diejenige eines vergleichbaren Vollgummipuffers, und ist schließlich auch die mechanische Festigkeit in dieser Richtung, beispielsweise die Einreißfestigkeit und die Weiterreißfestigkeit, deutlich geringer als bei einem entsprechenden Vollgummiblock. So erwünscht einerseits und so tolerierbar andererseits diese Kenndaten in Richtung senkrecht zur Ebene der Kanalscharen sein mögen, so unerwünscht sind sie in aller Regel in der in der Ebene der Kanalscharen liegenden Richtung.

Aus der EP 0 187 888 A1 ist ein Federkörper gemäß Oberbegriff des Anspruchs 1 bekannt, der aus einem Elastomerblock besteht, der mit zylindrischen oder prismatischen Hohlkanälen durchsetzt ist, die ihrerseits im Elastomerblock ausgebildete Hohlräume durchsetzen, deren größter lichter Querschnitt in der senkrecht zur Kanalachse liegenden Ebene größer als der Querschnitt der Hohlkanäle in dieser Ebene ist. Die Hohlkanäle verlaufen dabei parallel zueinander und die Hohlräume sind relativ zueinander so angeordnet, daß sie im Elastomerblock ein kubisch primitives Raumgitter bilden.

Der Erfindung liegt die Aufgabe zugrunde, ein Federelement der vorstehend genannten Art zu schaffen, das bei weicher Federkennlinie und guter akustischer Abkopplung bei bestimmungsgemäßer Verwendung des Federelements nicht nur in Richtung des Vektors der einwirkenden und abzufedernden sowie akustisch zu entkoppelnden Auflast, sondern auch in einer Richtung senkrecht zu diesem Vektor verbesserte federelastische und andere mechanische Kenndaten wie insbesondere eine verbesserte Reißfestigkeit, aufweist.

Diese Aufgabe wird durch ein Federelement nach der Lehre des Anspruchs 1 gelöst.

Die wesentliche Grundidee der Erfindung manifestiert sich also darin, daß sämtliche im Elastomerblock ausgebildeten Hohlkanäle bei dem Federelement gemäß der Erfindung parallel zueinander verlaufend ausgerichtet sind, wobei gleichzeitig Hohlräume, die von diesen untereinander sämtlich parallelen Hohlkanälen durchsetzt sind, nach einer dreidimensionalen kubisch-flächenzentrierten Kugelpackung "auf Lücke" zu den jeweils nächsten Nachbarn gegeneinander versetzt angeordnet sind. Dabei soll sowohl eine Verteilung der Hohlräume auf einem streng geometrisch kubisch flächenzentrierten bzw. hexagonalen Gitter erfaßt sein, sei dieses Gitter nun zweidimensional oder dreidimensional ausgebildet, als auch solche Verteilungen einschließen, deren geometrischer Ort eine gekrümmte Fläche oder ein gekrümmter Raum ist, beispielsweise also eine Zylindermantelfläche oder ein zylindrischer Ringabschnitt.

Das Verblüffende an dieser Anordnung ist, daß sie, selbstverständlich nach Maßgabe und in Abhängigkeit der äußeren Abmessungen und Gestaltung des Federelements im einzelnen sowohl in Richtung der untereinander parallelen Hohlkanäle als auch in Richtung der Radialebene dieser Kanäle sinnvoll und vorteilhaft belastet werden kann. Im Vergleich zu dem eingangs beschriebenen bekannten Lager mit nicht zueinander parallel angeordneten Hohlkanälen ist das Lager gemäß der Erfindung bei vergleichbarer mechanischer Belastbarkeit in Axialrichtung federtechnisch etwas härter als das bekannte Lager, weist dafür aber eine wesentlich größere mechanische und schwingungstechnische Festigkeit in Radialrichtung, stets bezogen auf die Kanäle, auf und zeigt unerwarteterweise und überraschenderweise ein akustisches Isolationsvermögen, d.h. eine akustische Abkopplung zwischen Auflager und Widerlager, und zwar sowohl bei axialer als auch bei radialer Belastung, die gegenüber der akustischen Entkopplung über ein entsprechend ausgelegtes Federelement oder
Lagerelement nach dem Stand der Technik praktisch unverändert ist. Dieser überraschende Effekt wird auf zwei Einflußfaktoren zurückgeführt, nämlich zum einen darauf, daß die Packung der Hohlräume, bezogen auf ein identisches Verteilungsvolumen, wesentlich dichter bei dem Federelement gemäß der Erfindung ist als bei dem Federelement gemäß dem Stand der Technik, und zum anderen die Dämpfung der akustischen Übertragungswelle in den Hohlräumen selbst doch offensichtlich wesentlich größer als bisher angenommen ist.

Ein weiterer wesentlicher Vorteil des Federelements gemäß der Erfindung liegt darin, daß dieses neue Federelement gemäß der Erfindung auch in Richtung der Hohlkanäle, und nicht nur senkrecht dazu, bestimmungsgemäß und ohne Nachteile mit einer abzufedernden Nutzlast beaufschlagt werden kann. Während das bekannte Lager in dieser Querrichtung, d.h. in Richtung der Längsachse der Hohlkanäle, nicht mehr ausreichend stabil ist, um Nutzlasten abzufedern, die in der Richtung senkrecht zu den Kanalscharenebenen ohne weiteres aufgenommen werden kann, zeigt das Federelement gemäß der Erfindung bei gleicher Belastung in axialer und radialer Richtung, stets bezogen auf die Kanalachse, praktisch die gleiche Lagerstabilität. Dies ist dadurch zu erklären, daß die Hohlkanäle im Federelement gemäß der Erfindung besser im Elastomerblock stabilisiert sind, als dies im bekannten Federelement der Fall ist. Während bei sich im Raum überkreuzender Anordnung der Kanalscharen die einzelnen Hohlkanäle in der Elastomermatrix bei axialer Belastung durch fehlende Materialstabilisierung und fehlende geometrische Stabilisierung verhältnismäßig leicht zum Ausknicken neigen, sind die Hohlkanäle auch in Axialrichtung beim Federelement gemäß der Erfindung sowohl durch die stärkere Elastomersäule stabilisiert, die in der Matrix um den Hohlkanal herum stehenbleibt, als auch rein konfigurativ verstärkt, und zwar dadurch, daß sämtliche Hohlkanäle in einem Elastomerblock parallel zueinander ausgerichtet sind und so einander stützend und versteifend wirken, wobei die querliegenden Hohlkanäle fehlen, durch deren Durchbiegung bei nicht absolut genau senkrecht einwirkender Nutzlast ein Ausknicken der axial belasteten Hohlkanäle eingeleitet wird.

Mit anderen Worten, durch die prinzipiell mögliche axiale und/oder radiale Belastbarkeit des Federelements gemäß der Erfindung werden dem Konstrukteur Möglichkeiten eröffnet, die ihm bei dem nur unidirektional sinnvoll belastbaren Federelement nach dem Stand der Technik nicht gegeben sind, obwohl beide Federelemente praktisch die gleiche akustische Dämpfung bzw. Entkopplung zwischen Auflager und Widerlager aufweisen. So eignet sich das Federelement gemäß der Erfindung beispielsweise optimal zur Herstellung der insbesondere im Kraftfahrzeugbau häufig verwendeten Einknüpflager, also als Lager dienender einknüpfbarer Gummipuffer, die aus dem bekannten Federelement wegen deren fehlender Seitenstabilität nicht herstellbar sind.

Die Vorteile des Federelements gemäß der Erfindung kommen verstärkt bei solchen Elementen zum Tragen, deren äußere Konfiguration von der Kugelgestalt oder Würfelgestalt ausgeprägt abweicht, also vor allem bei einem Elastomerblock, der in seiner Außenkontur quaderförmig , prismatisch oder zylindrisch ist, wenn in einem solchen Elastomerblock die Hohlkanäle vorzugsweise parallel zur langen Achse des Elastomerblocks ausgerichtet sind.

Nach einer Ausgestaltung der Erfindung sind insbesondere für Federelemente mit einer längeren und zwei kürzeren Achsen des Elastomerblocks die Kanäle vorzugsweise einseitig offen und einseitig geschlossen ausgebildet und erstrecken sich nach Art von Blindbohrungen nur über einen Teil der gesamten axialen Länge des Elastomerblocks von einer der Stirnseiten des Blocks von außen her nach innen in diesen Elastomerblock hinein. Alternativ können sich solche einseitig offenen Hohlkanäle auch von zwei einander gegenüberliegenden Stirnseiten her in den Elastomerblock hinein erstrecken, dann vorzugsweise jedoch so, daß sich diese beiden zueinander axial parallelen Kanalscharen in Längsrichtung nicht überlappen und vorzugsweise im Verhältnis 1:1, bezogen auf die Anzahl der Hohlkanäle, koaxial zueinander ausgerichtet sind.

Zur Verwendung als bzw. bei der Ausgestaltung als insbesondere Einknüpflager ist der Elastomerblock vorzugsweise zumindest im wesentlichen zylindrisch konfiguriert und sind die Hohlkanäle in diesen zylindrischen Elastomerblock auf mindestens einer zum Elastomerzylinder koaxialen Zylinderfläche in dessen Elastomermatrix ausgebildet. Vor allem bei Elastomerzylindern mit relativ großem Durchmesser im Vergleich zu den radialen Abmessungen der Hohlkanäle und der Hohlräume können die Hohlkanäle und Hohlräume auch auf mehreren sowohl untereinander als auch zum zylindrischen Elastomerblock selbst konzentrischen Zylinderflächen angeordnet und verteilt sein, wobei die Hohlräume von Zylinderfläche zu Zylinderfläche dann jedoch wiederum auf Lücke zueinander stehen, und zwar sowohl entweder auf derselben Radialfläche oder auf ebenfalls im Winkel gegeneinander versetzten bzw. verschachtelten "Radialflächen", d.h. auf Ebenen, die axial stehen und sich in ihrer Fläche radial bzw. diametral erstrecken.

Bei Federelementen, insbesondere Lagern, speziell Einknüpflagern oder Hülsenlagern dieser Art weist der Elastomerblock vorzugsweise in an sich bekannter Weise eine zentrale durchgehende beidseitig offene Bohrung auf, die im Fall eines Hülsen-Radiallagers eine Innenhülse aufnehmen kann.

Wenn es gilt, mit einem unter Verwendung des Federelementes gemäß der Erfindung aufgebauten Lager auch schräg zu einer der Hauptachsen des Federelementes einwirkende Nutzlastkräfte federnd aufzunehmen, ohne das Federelement selbst unausgewogen zu belasten, dann können die Kanäle und die Hohlräume im Elastomerblock des Federelements selbstverständlich auch zweckentsprechend ungleich verteilt in der Matrix des Elastomerblocks angeordnet sein. Vorzugsweise, und zwar insbesondere dann, wenn mit einer Einwirkung der Nutzlastkräfte in Richtung einer der Hauptachsen des Federelements gerechnet werden kann, sind die Kanäle und die Hohlräume räumlich möglichst gleichmäßig, zumindest im wesentlichen möglichst gleichmäßig,über die als Elastomerblock verfügbare Matrix verteilt. Lediglich für eine Reihe von Spezialanwendungen mag es sich dabei empfehlen, in den Randbereichen des Elastomerblocks, und zwar sowohl auf den Seitenflächen als auch auf den Stirnseitenflächen, das Matrixmaterial in stärkerer Schicht stehenzulassen.

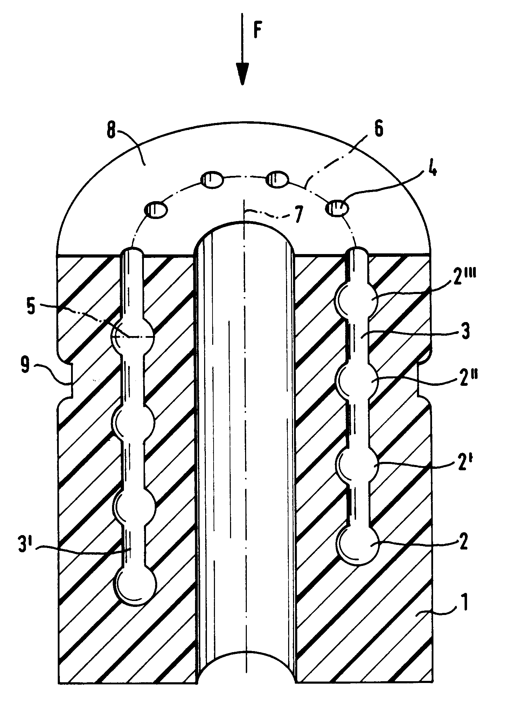

Die Erfindung ist im folgenden anhand eines Ausführungsbeispiels in Verbindung mit der Zeichnung näher erläutert. Dabei zeigt die einzige Figur
in schematischer perspektivischer Darstellung und im Axialschnitt ein zylindrisches Federelement als Ausführungsbeispiel der Erfindung.

In der Zeichnung ist in schematischer perspektivischer Darstellung und im Axialschnitt ein Ausführungsbeispiel des Federelements der Erfindung gezeigt. Das Federelement ist als Einknüpflager für eine bestimmungsgemäß überwiegend axiale Belastung in Richtung des Lastvektors F ausgelegt.

Das in der Zeichnung dargestellte Federelement besteht aus einem Elastomerblock 1, der mit Hohlräumen 2 und Hohlkanälen 3 durchsetzt ist. Die Hohlräume 2 sind kugelförmig ausgebildet. Die Mittelachse der Hohlkanäle 3 läuft durch den Mittelpunkt der kugelförmigen Hohlräume 2. Alle kugelförmigen Hohlräume 2,2′,2˝,2‴ haben entlang der Mittelachse des Hohlkanals 3 gleichen Abstand voneinander.

Die radiale Querschnittsfläche oder Öffnung 4 der Hohlkanäle 3 ist rund halb so groß wie der lichte Querschnitt 5 durch die kugelförmigen Hohlräume 2 in dieser Ebene.

Die Hohlkanäle 3 sind in der Elastomermatrix des in seiner Außenkontur zylindrischen Elastomerblocks 1 insgesamt auf einer Zylinderfläche 6 als geometrischem Verteilungsort angeordnet. Die Hohlkanäle 3 erstrecken sich parallel zur langen Zentralachse 7 des Elastomerblocks 1. Die auf den Hohlkanälen 3 aufgereihten Hohlräume 2 sind von Kanal zu Kanal jeweils so versetzt, daß sie auf Lücke stehen, d.h. daß die in der Radialebene tangential am weitesten zum Nachbarn hin vorstehenden Kugelpole jeweils zumindest im wesentlichen in derselben Radialebene liegen, in der der Mittelpunkt des Abstandes der beiden benachbarten Kugeln des benachbarten Hohlkanals liegt. Die so verteilten Hohlräume bilden insgesamt ein kubisch flächenzentriertes bzw. hexagonales Flächengitter, das auf einer Zylinderfläche in sich geschlossen zurückgewölbt angeordnet ist.

Bei dem in der Zeichnung dargestellten Ausführungsbeispiel der Erfindung sind die Hohlkanäle 3 einseitig und, bezogen auf den Elastomerblock, stirnseitig offen und auf ihrem gegenüberliegenden Ende einseitig geschlossen ausgebildet und erstrecken sich nach Art von Blindbohrungen nur über einen Teil der gesamten axialen Länge des Elastomerblocks 1 von außen her, genauer gesagt von der auflastseitigen Stirnseite 8 des Elastomerblocks her in diesen hinein.

Im Elastomerblock 1 des in der Zeichnung dargestellten Federelements ist weiterhin eine relativ weite zentrale durchgehende und beidseitig offene Bohrung ausgebildet, die beispielsweise zur Aufnahme von Anschlußstücken dienen kann.

In der aus der Zeichnung ersichtlichen Weise sind die Hohlkanäle 3 und die Hohlräume 2 im Elastomerblock 1 noch mit so ausreichend viel Vollmaterial umgeben, daß eine Ringnut 9 im Außenmantel des zylindrischen Elastomerblocks 1, die der Fixierung des Elastomerblocks 1 im Einknüpfrahmen dient, noch ausreichend Abstand von den im Inneren der Elastomermatrix ausgeformten Hohlkanälen und Hohlkörpern hält.

## Patentansprüche

1. Federelement aus einem mit Hohlräumen (2) und Hohlkanälen (3), die sämtlich zueinander parallel verlaufen, durchsetzten Elastomerblock (1), in dem die im wesentlichen kugelförmigen Hohlräume (2) im wesentlichen zentral von den Hohlkanälen (3) durchsetzt sind, und in dem die Hohlkanäle (3) eine radiale Querschnittsfläche (4) aufweisen, die im wesentlichen im Bereich von 25% bis 75% der Querschnittsfläche (5) eines von dem jeweiligen Kanal (3) durchsetzten Hohlraumes (2) liegt,
dadurch **gekennzeichnet,**
daß sämtliche Hohlräume (2) des Blocks (1) gemäß einer kubisch flächenzentrierten Kugelpackung dreidimensional oder gemäß eines Seitenflächengitters einer kubisch flächenzentrierten kugelpackung zweidimensional auf Lücke angeordnet sind.

2. Federelement nach Anspruch 1,
dadurch **gekennzeichnet,**
daß der Elastomerblock (1) in seiner Außenkontur quaderförmig, prismatisch oder zylindrisch ist und sich die Hohlkanäle (3) parallel zur langen Achse (7) des Elastomerblocks (1) erstrecken.

3. Federelement nach Anspruch 2,
dadurch **gekennzeichnet,**
daß die Hohlkanäle (3) an einem axialen Ende offen und am anderen axialen Ende geschlossen ausgebildet sind und sich nach Art von Blindbohrungen nur über einen Teil der gesamten axialen Länge des Elastomerblocks (1) von außen nach innen in diesen hinein erstrecken.

4. Federelement nach Anspruch 3,
dadurch **gekennzeichnet,**
daß sich die Hohlkanäle (3) von zwei einander gegenüberliegenden Stirnseiten her in den Elastomerblock (1) hinein erstrecken.

5. Federelement nach einem der Ansprüche 1 bis 4,
dadurch **gekennzeichnet,**
daß der Elastomerblock (1) zumindest im wesentlichen zylindrisch ist und die Hohlkanäle (3) im Elastomerblock (1) auf mindestens einer zum Elastomerzylinder koaxialen Zylinderfläche (6) angeordnet sind.

6. Federelement nach Anspruch 5,
dadurch **gekennzeichnet,**
daß der Elastomerblock (1) eine zentrale durchgehende beidseitig offene Bohrung aufweist.

7. Federelement nach einem der Ansprüche 2 bis 6,
**gekennzeichnet** durch
seine Ausgestaltung als Einknüpflager zur bestimmungsgemäß überwiegend axialen Belastung oder als Hülsenlager zur bestimmungsgemäß überwiegend radialen Belastung.

8. Federelement nach Anspruch 1,
**gekennzeichnet** durch
eine räumlich gleichmäßige Verteilung der Hohlkanäle (3) und Hohlräume (2) im Elastomerblock (1).

9. Federelement nach einem der Ansprüche 1 oder 8,
**gekennzeichnet** durch
seine Ausgestaltung als Gummi- oder Gummi-Metall-Lager dergestalt, daß der Lastvektor (F) einer bestimmungsgemäß gelagerten Masse senkrecht zu den Hohlkanalachsen ausgerichtet ist.

## Claims

1. Spring element comprising an elastomer block interspersed with cavities (2) and hollow channels (3), all running mutually parallel in which the essentially spherically-shaped cavities (2) essentially are intersected centrally by the hollow channels (3) and in which the hollow channels (3) have a radial cross-sectional area essentially in the range of 25 % to 75 % of the cross-sectional area (5) of the cavity (2) intersected by the respective channel (3),
**characterized** in that
all cavities (2) of the block (1) are arranged like a face-centered cube sphere packing three-dimensionally or like a side face lattice of a face-centered cube sphere packing two-dimensionally on gap.

2. Spring element according to claim 1,
**characterized** in that
the elastomer block (1) is in its outer conture cuboid, prismatic or cylindrical and that the hollow channels (3) extend parallel to the longitudinal axis (7) of the elastomer block (1).

3. Spring element according to claim 2,
**characterized** in that
the hollow channels (3) are formed open at one axial end and closed at the other axial end and are extended in the manner of dummy bores only cross a part of the entire axial length of the elastomer block (1) from outwards to inwards into the said one.

4. Spring element according to claim 3,
**characterized** in that
the hollow channels (3) extend from two opposite front sides into the elastomer block (1).

5. Spring element according to one of claims 1 to 4,
**characterized** in that
the elastomer block (1) is at least essentially cylindrical and that the hollow channels (3) are arranged in the elastomer block (1) on at least one cylinder surface (6) coaxially to the elastomer cylinder.

6. Spring element according to claim 5,
**characterized** in that
the elastomer block (1) comprises a central passing bore being open at both sides.

7. Spring element according to one of claims 2 to 6,
**characterized** by
its constructive configuration as a pressed-in bearing for characteristically mainly axial loads or as a sleeve bearing for characteristically mainly radial loads.

8. Spring element according to claim 1,
**characterized** by
a spatial uniform distribution of the hollow channels (3) and cavities (2) in the elastomer block (1).

9. Spring element according to one of claims 1 to 8,
**characterized** by
its constructive configuration as rubber- or rubber-metal-bearing in such a manner that the load vector (F) of a characteristically supported mass is arranged perpendicular to the axis of the hollow channels.

## Revendications

1. Elément ressort, constitué d'un bloc en élastomère (1) traversé par des volumes creux (2) et des canaux creux (3), qui sont tous dirigés parallèlement, bloc dans lequel les volumes creux (2), essentiellement de forme sphérique, sont traversés, essentiellement au centre, par les canaux creux (3), et dans lequel les canaux creux (3) présentent une surface de section radiale (4) qui représente essentiellement 25 à 75 % de la surface (5) de la section d'un volume creux (2) traversé par le canal creux (3) correspondant,
caractérisé en ce que les différents volumes creux (2) du bloc (1) sont disposés en quinconce, suivant un ensemble cubique de sphères, centré en surface de façon tridimensionnelle, ou suivant un réseau de surfaces latérales d'un ensemble cubique de sphères, centré en surface de façon bidimensionnelle.

2. Elément ressort suivant la revendication 1, caractérisé en ce que le bloc en élastomère (1), par son contour extérieur, a une forme carrée, prismatique ou cylindrique, et que ses canaux creux (3) sont disposés parallèles à l'axe longitudinal (7) du bloc en élastomère (1).

3. Elément ressort suivant la revendication 2, caractérisé en ce que les canaux creux (3) sont réalisés ouverts à une extrémité axiale et fermés à l'autre extrémité axiale, et en ce qu'ils sont disposés, depuis l'extérieur vers l'intérieur dans le bloc en élastomère (1), à la façon d'alésages borgnes, seulement sur une partie de la longueur axiale totale de ce bloc.

4. Elément ressort suivant la revendication 3, caractérisé en ce que les canaux creux (3) s'étendent dans le bloc en élastomère (1), vers l'intérieur, à partir de deux faces frontales opposées.

5. Elément ressort suivant l'une quelconque des revendications 1 à 4, caractérisé en ce que le bloc en élastomère (1) est, au moins, essentiellement cylindrique, et que les canaux creux (3) sont disposés dans le bloc en élastomère (1) sur au moins une surface cylindrique (6) de même axe que le cylindre en élastomère.

6. Elément ressort suivant la revendication 5, caractérisé en ce que le bloc en élastomère (1) présente un alésage central traversant, ouvert aux deux extrémités.

7. Elément ressort suivant l'une quelconque des revendications 2 à 6, caractérisé par sa conception sous la forme d'un palier à emboîtement pour reprendre une charge axiale excédentaire déterminée, ou sous la forme d'un palier à douille pour reprendre une charge radiale excédentaire déterminée.

8. Elément ressort suivant la revendication 1, caractérisé par une répartition régulière dans l'espace des canaux creux (3) et des volumes creux (2) dans le bloc en élastomère (1).

9. Elément ressort suivant la revendication 1 ou la revendication 8, caractérisé par sa conception, sous la forme d'un palier caoutchouc ou métal-caoutchouc, telle que le facteur de charge (F) d'une masse disposée de manière déterminée soit dirigé perpendiculairement aux axes des canaux creux.
